Europäisches Patentamt

European Patent Office

Office européen des brevets

(11) Veröffentlichungsnummer : **0 078 344**
**B1**

(12) **EUROPÄISCHE PATENTSCHRIFT**

(45) Veröffentlichungstag der Patentschrift :
26.03.86

(21) Anmeldenummer : **81109466.3**

(22) Anmeldetag : **31.10.81**

(51) Int. Cl.⁴ : **B 23 B   5/12**

(54) **Verfahren und Vorrichtung zum Drehschälen von metallischen Stangen und Rohren.**

(43) Veröffentlichungstag der Anmeldung :
**11.05.83 Patentblatt 83/19**

(45) Bekanntmachung des Hinweises auf die Patenterteilung : **26.03.86 Patentblatt 86/13**

(84) Benannte Vertragsstaaten :
**AT BE CH DE FR GB IT LI SE**

(56) Entgegenhaltungen :
**DE-B- 1 258 236**
**FR-A- 2 327 837**

(73) Patentinhaber : **Th. Kieserling & Albrecht GmbH & Co.**
**Birkenweiher 66**
**D-5650 Solingen 1 (DE)**

(72) Erfinder : **Weck, Karl-Gustav**
**Schuhmannstrasse 3**
**D-5650 Solingen 19 (DE)**
Erfinder : **Klostermann, Gerd**
**Meerowinger Strasse 20**
**D-5650 Solingen (DE)**
Erfinder : **Hoppe, Herbert**
**Birker Strasse 28**
**D-5650 Solingen 1 (DE)**

Jouve, 18, rue St-Denis, 75001 Paris, France

## Beschreibung

Die Erfindung betrifft ein Verfahren und eine Vorrichtung zum Drehschälen gemäß Oberbegriff von Anspruch 1 bzw. 4. Das Drehschälen von Stangen und Rohren ist in der Endphase der Bearbeitung einer jeden Stange bzw. eines jeden Rohres in gewissen Fällen problematisch. Wenn die per Definition endlichen Stangen und Rohre mit hoher Vorschubgeschwindigkeit geschält werden, besteht das Problem darin, die in dichter Folge ankommenden Stäbe aus dieser Folge herauszunehmen, zwischenzuspeichern oder zu anderen Zwecken querzutransportieren.

Aus der DE-A-25 46 171 ist es bekannt, bei einer Drahtschälmaschine die Vorschubgeschwindigkeit am Ende der Bearbeitung herabzusetzen, um ein Abdrehen des Drahtes zu vermeiden. Insofern liegt dort eine Absenkung der Vorschubgeschwindigkeit am Ende der Schälbearbeitung vor. Diese Maßnahme erlaubt jedoch keine axiale Trennung aufeinanderfolgender Stäbe. Vielmehr wird die Schälleistung gegen Ende der Bearbeitung herabgesetzt, was bei kurzen Werkstückabschnitten einen merklichen Einfluß auf die Leistung der Schälmaschine hat. In dem dort geschilderten Fall, beim Drahtschälen vom Bund, kann dieser Gesichtspunkt außer Acht bleiben, da die Bearbeitung eines Endabschnittes aufgrund der Länge des aufgewickelten Drahtes nur selten vorkommt.

Der Begriff der drehfesten Einspannung ist dahingehend zu verstehen, daß der Messerkopf rotiert und nicht das Werkstück. Ein geringer Eigendrall des Werkstücks, wie er durch Schlupf oder durch um wenige Winkelgrade geschränkte Einzugsrollen entsteht, ist ebenfalls unter dem Begriff der drehfesten Einspannung zu verstehen.

Der Erfindung liegt die Aufgabe zugrunde bei einem gattungsgemäßen Verfahren bzw. bei einer gattungsgemäßen Vorrichtung, in schneller axialer Folge ohne wesentlichen Zwischenraum aus einer Schälmaschine austretende Werkstücke nebeneinander abzulegen.

Diese Aufgabe wird in verfahrenstechnischer Hinsicht durch das Kennzeichen von Patentanspruch 1 gelöst. Durch die Beschleunigung werden die Stäbe separiert, so daß ein Zwischenraum entsteht und können so auf einfache Weise einzeln quertransportiert werden. Durch die Absenkung der axialen Geschwindigkeit im Anschluß daran wird ein geschoßartiges Austreten der Werkstücke aus der Schälmaschine vermieden. Die axiale Lage der die Werkstücke nach deren Quertransport wird berechenbarer, die axiale Bündigkeit der abgelegten Werkstücke wird verbessert.

Eine Verbesserung beim weiteren Transport der geschälten Werkstücke wird durch das Verfahrensmerkmal von Anspruch 2 erzielt. Das mit einer von allen anderen Kenndaten unabhängigen konstanten axialen Geschwindigkeit ausgeschobene Werkstück erhält eine gleichmäßigere axiale Position als ein mit wechselnder Geschwindigkeit ausgestoßenes Werkstück und läßt sich so präziser ergreifen und in die nächste Bearbeitungsmaschine einführen, zwischenspeichern oder dergleichen. Die Veränderung der axialen Geschwindigkeit nach Anspruch 2 wird in den meisten Fällen eine Herabsetzung sein, sie kann jedoch, bei eines sehr kleinen Vorschubgeschwindigkeit auch eine Heraufsetzung beinhalten. Der Vorzug dieser Lösung liegt aber bei den hohen Vorschubgeschwindigkeiten. Der im Anspruch 3 wiedergegebene Bereich für den Sollwert stellt sicher, daß einerseits ein ausreichender Zwischenraum zwischen den aufeinanderfolgenden Stäben verbleibt, um sie aus der Schällinie zu nehmen, andererseits sichert dieses Merkmal einen kleinen Streubereich bei der axialen Endlage der Werkstücke nach dem Ausschieben aus der Schälmaschine.

Eine in ihrer Grundkonzeption bekannte Schälmaschine, wie sie zum Beispiel aus dem DE-U 17 99 939 bekannt ist, ist im Oberbegriff von Anspruch 4 wiedergegeben.

Während der Vorschlag aus dieser Vorveröffentlichung zum Ziel hat, die Schnittgeschwindigkeit und die Vorschubgeschwindigkeit des im Schälprozess befindlichen Werkstücks zu koppeln, liegt der Erfindung die Aufgabe zugrunde, die Vorschubgeschwindigkeit des fertig geschälten Werkstücks abweichend von der Vorschubgeschwindigkeit beim Schälen so gestalten zu können, daß ein geordnetes seitliches Herausnehmen des einzelnen Werkstücks aus der dichten Folge der ankommenden Werkstücke möglich wird.

Die Merkmale von Anspruch 4 umfassen die Lösungsmittel zur Erzielung des vorbeschriebenen Geschwindigkeitsverlaufes. Sie sehen separate Mittel für Spannung und Vorschub des Werkstücks in der Endphase der Schälbearbeitung und den anschließenden Abtransport des Werkstücks vor. Der Spannwagen übernimmt die eigentliche Funktion des Ausziehens des Werkstücks aus dem Messerkopf. In diesem Falle beschränkt sich die Funktion des Auszugsrollenpaares auf das Beschleunigen bzw. Separieren der einzelnen Werkstücke und das anschließende Abbremsen zum behutsamen Ausschieben derselben. Die konkreten Lösungsmittel werden von der Art der Ausführung der Steuerung für das Auszugsrollenpaar bestimmt.

Bevorzugt ist die im wesentlichen mehr elektrische Lösung gemäß Anspruch 5 vorgesehen, die einen harmonischen Geschwindigkeit — Weg — Verlauf für das Werkstück ermöglicht. Die Endphase der Bearbeitung des Werkstücks wird durch den Impulsgeber, z. B. eine Lichtschranke eingeleitet. Das Auszugsrollenpaar übernimmt im Anschluß an den zwischen Messerkopf und Auszugsrollenpaar vorgesehenen Spannwagen die axiale Bewegung des geschälten Werkstücks. Das Auszugsrollenpaar beschleunigt das Werkstück in axialer Richtung und separiert es somit von dem nachfolgenden, noch im Schälprozess befindlichen Werkstück. So kurz wie möglich, bevor das Werkstück den Auszugsrollenapparat verläßt, wird es — jedenfalls bei einer hohen Vorschubgeschwindigkeit im Schälprozess — auf eine kleine axiale Geschwindigkeit abgebremst und mit dieser auf den Sollwert herabgesetzten axialen Geschwindigkeit aus der Schälmaschine ausgeschoben. Die einzelnen Beschleunigungen werden von der Längenmeßeinrichtung ausgelöst. Da die vom Werkstück zurückzulegenden Wege unabhängig von der gewählten Vorschubgeschwindigkeit sind, und nur von den baulichen Gegebenheiten der Schälmaschine abhängen, ist eine Anpassung der Punkte der Geschwindigkeitsänderungen an unterschiedliche Vorschubgeschwindigkeiten überflüssig. Das Maß der Erhöhung der axialen Geschwindigkeit orientiert sich, wie erwähnt, an der Vorschubgeschwindigkeit und wird in der Steuerungseinheit für das Auszugsrollenpaar ermittelt.

Der Forderung nach der Möglichkeit auch kurze Werkstücke bearbeiten zu können wird durch die Ausgestaltung der Erfindung gemäß Anspruch 6 Rechnung getragen. Diese Ausgestaltung ist beim Schälen kurzer Werkstücke erforderlich. Das Meßergebnis der Längenmeßeinrichtung vor dem Messerkopf am Einschubapparat wird von der Längenmeßeinrichtung am Auszugsrollenpaar übernommen und ergänzt. Dem liegt der Umstand zugrunde, daß bei kurzen Werkstücken die auslaufseitige Längenmeßeinrichtung noch nicht arbeiten kann, da das Auszugsrollenpaar das Werkstück noch nicht erfaßt hat.

Alternativ zu diesem im wesentlichen elektrischen Lösungsweg kann eine Ausführungsform der Erfindung nach Anspruch 7 Anwendung finden, die durch die Verwendung von zwei Antrieben gekennzeichnet ist. Die von der Vorschubgeschwindigkeit abgeleiteten Abschnitte des Geschwindigkeitsverlaufs des Werkstücks im Auszugsrollenpaar werden vom Einschubapparat mit einer mechanischen Verbindung abgeleitet. Hierzu werden mindestens zwei steuerbare Kupplungen benötigt, mit denen entweder der vom Einschubapparat abgeleitete Antrieb des Auszugsrollenpaares eingeschaltet wird oder ein separater Drehstrommotor der am Ende des Vorschubes zur Herabsetzung der axialen Geschwindigkeit verwendet wird. Diese letzte axiale Geschwindigkeit (Sollwert), mit der das Werkstück die Schälmaschine verläßt, ist unabhängig von der für den Schälbetrieb gewählten Vorschubgeschwindigkeit. Wenn kein zusätzlicher Spannwagen vorgesehen ist, muß der vom Einschubapparat abgeleitete Antrieb mit einer weiteren Schaltstufe ausgerüstet werden, damit das Auszugsrollenpaar auch den letzten Abschnitt des Auszugsvorgangs aus dem Bereich des Messerkopfes übernehmen kann. In diesem Falle muß die Steuerungseinrichtung für das Auszugsrollenpaar drei Kupplungen aufweisen. Eine davon dient der Einkupplung der Schaltstufe für die Übernahme des Werkstücks mit der Vorschubgeschwindigkeit, die zweite der Einschaltung der Schaltstufe mit der verdoppelten Vorschubgeschwindigkeit und die dritte dem Einschalten des separaten Drehstrommotors für das letzte Ausschieben des fertig geschälten Werkstücks aus der Schälmaschine.

Die Erfindung wird im weiteren anhand der Zeichnungen erläutert. Dabei zeigen

Figur 1 eine schematische Wiedergabe einer Schälmaschine mit den Steuerungsmitteln für den Werkstückvorschub.

Figur 2 eine Schälmaschine mit einem zusätzlichen Spannwagen

Figur 3 eine Antriebsvariation für das Auszugsrollenpaar.

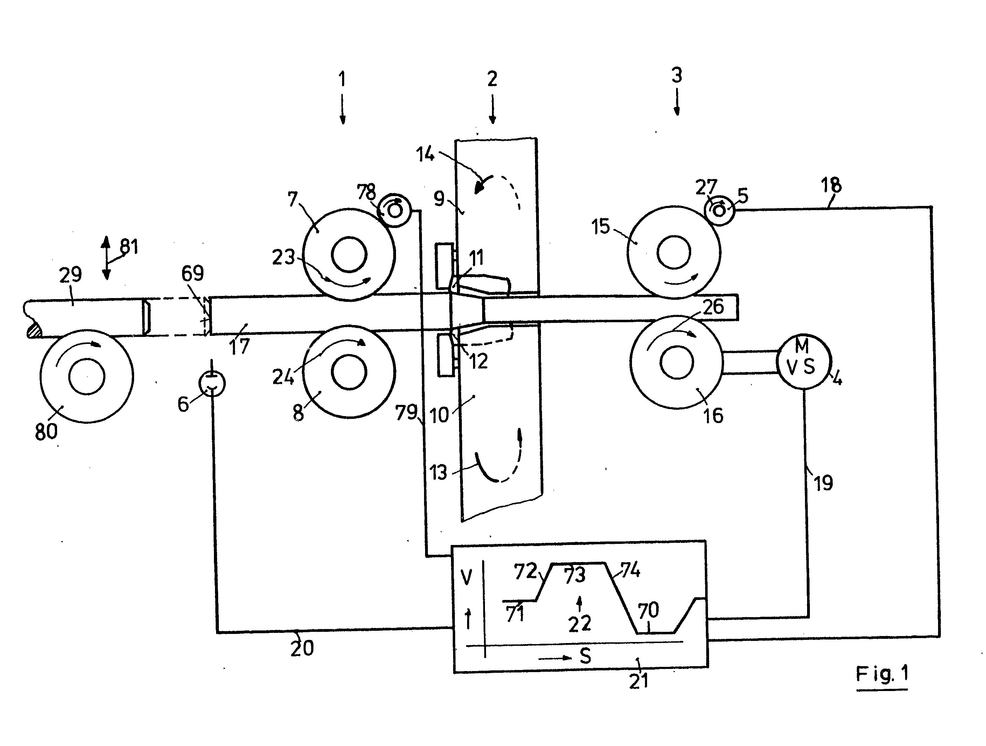

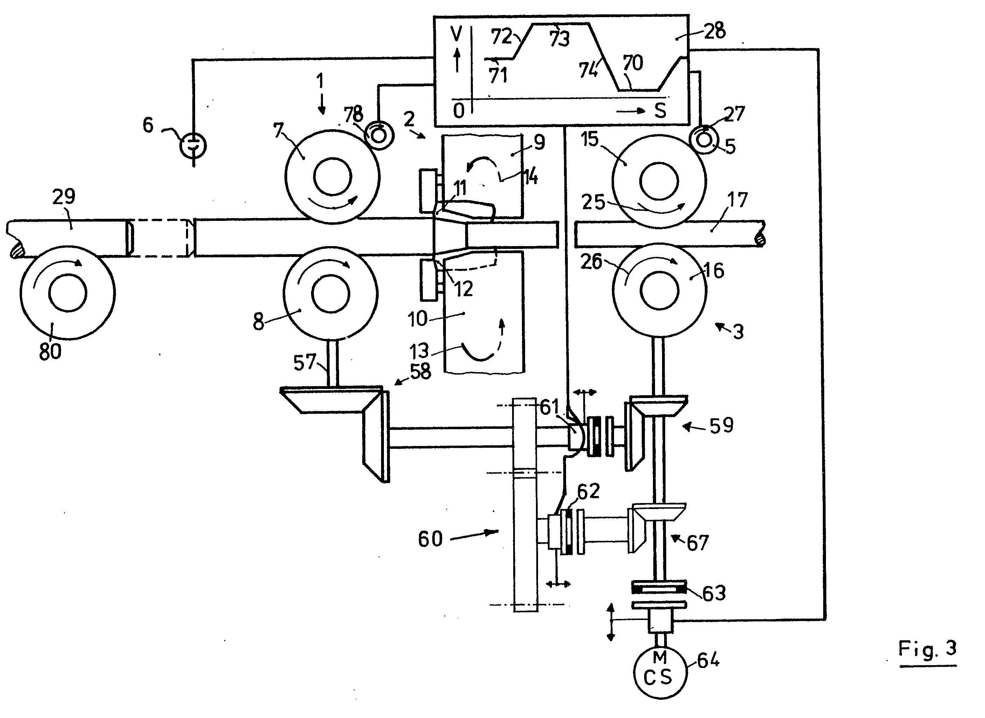

Mit 1 ist der Einschubapparat der Schälmaschine nach den Fig. 1 und 3 bezeichnet. Diese Schälmaschine weist einen umlaufenden Messerkopf 2, ein Auszugsrollenpaar 3, einen Gleichstrommotor 4 für das Auszugsrollenpaar, eine Längenmeßeinrichtung 5 und 78, einen Impulsgeber 6 vor dem Einschubapparat und eine Steuerungseinheit 21 auf. Die Steuerungseinheit 21 steht über die Leitungen 18, 19, 20 und 79 mit dem Impulsgeber 6, dem Gleichstrommotor 4 und den Längenmeßeinrichtungen 5 und 78 in Verbindung. Sie beeinhalten die vorzugsweise elektronischen Steuerungselemente zur Umsetzung der Signale des Impulsgebers und der Längenmeßeinrichtungen in Größen zur Steuerung des Gleichstrommotors 4. Der Einschubapparat 1 besteht aus zwei Einschubrollen 7, 8 die das Werkstück 17 durch Drehung in Richtung der Pfeile 23, 24 durch die Schälmaschine schieben. Die Vorschubrollen werden von einem nicht dargestellten Motor angetrieben. Im Messerkopf 2 sind zwei Messerhalter 9, 10 radial zur Drehachse des Messerkopfes verschiebbar gelagert. Der Messerkopf läuft in Richtung der Pfeile 13, 14 um. An den nach innen gerichteten Enden der Messerhalter 9, 10 sind Schälmesser 11, 12 eingeklemmt. Diese schälen auf wendelförmiger Bahn eine Oberflächenschicht vom runden Werkstück 17 ab. Der Messerkopf wird von einem nicht dargestellten Motor angetrieben. Das Auszugsrollenpaar 3 mit den zwei an ihrem Umfang profilierten Rollen 15, 16 übernimmt den Vorschub des Werkstücks 17, sobald die Rollen 7, 8 in der Endphase der Schälbearbeitung außer Eingriff geraten. Die Auszugsrollen 15 und 16 ziehen das Werkstück 17 aus dem Messerkopf 2 aus und sichern es gleichzeitig gegen Verdrehen. In dieser Phase der Bearbeitung liegen die Stirnseiten der Werkstücke 17 und 29 noch dicht beieinander (gestrichelte Linie in Fig. 1). Bis zum Abschluß der Schälbearbeitung ist die axiale Geschwindigkeit 71 des Werkstücks 17 konstant. Sobald das fertig geschälte Werkstück 17 die Schälmesser 11 und 12 verlassen hat, schließt sich an die Vorschubgeschwindigkeit 71 eine Phase der Beschleunigung 72 an. Bei der Beschleunigung wird die axiale Geschwindigkeit etwa auf das Doppelte der Vorschubgeschwindigkeit erhöht und zwar bis auf den durch 73 gekennzeichneten Wert für die axiale Geschwindigkeit. In dieser Zeit erhöhter axialer Geschwindigkeit wird ein Zwischenraum zwischen dem Werkstück 17 und dem nachfolgenden Werkstück 29 gebildet.

Nach Erreichen eines Zwischenraumes von z. B. einem Meter wird die axiale Geschwindigkeit, die dem fertig geschälten Werkstück durch die Auszugsrollen 15, 16 vermittelt wird in der Bremsphase 74 auf einen Wert 70 herabgesetzt, mit dem das Werstück 17 die Auszugsrollen 15, 16 und somit die Schälmaschine als ganzes verläßt. Diese axiale Geschwindigkeit bei 70 ist üblicherweise ein Wert, der deutlich unterhalb der Vorschubgeschwindigkeit liegt. Mit dieser herabgesetzten Geschwindigkeit 70 beim Ausschub des Werkstücks wird erreicht, daß alle Werkstücke in einem eng begrenzten Bereich in axialer Richtung gesehen zum Stillstand kommen, um dann in möglichst präziser axialer Lage quertransportiert zu werden. Anschließend erhöht sich die Vorschubgeschwindigkeit der Auszugsrollen wieder auf den Wert bei 71 zur Übernahme des nächsten Werkstücks 29.

Das unbearbeitete Werstück 29 wird quer zu seiner Längserstreckung (Pfeil 81) auf den Rollgang 80 abgelegt, während das vorangehende Werkstück 17 geschält wird. Dadurch entsteht ein Zwischenraum zwischen den Werkstücken 17 und 29. Das Ende 69 des Werkstücks 17 wird von dem als Lichtschranke ausgebildeten Impulsgeber 6 erfaßt. Die Längenmeßeinrichtung 78 beginnt zu messen. Zwischenzeitlich schließt das auf dem Rollgang befindliche Werkstück auf und berührt die rückwärtige Endfläche 69 des Werkstücks. Sobald das Werkstück 17 das Auszugsrollenpaar 3 erreicht, tritt die Längenmeßeinrichtung 5 in Funktion, das Werkstück 17 wird bis zum Werkstückende 69 aus dem Messerkopf ausgezogen und beschleunigt (Phase 72). Die Steuerungseinheit 21 bestimmt aufgrund der erfaßten zurückgelegten axialen Wegstrecke des Werkstücks, ausgehend von dem Impuls vom Impulsgeber 6, Anfangs- und Endpunkte der einzelnen Geschwindigkeits- und Beschleunigungsphasen.

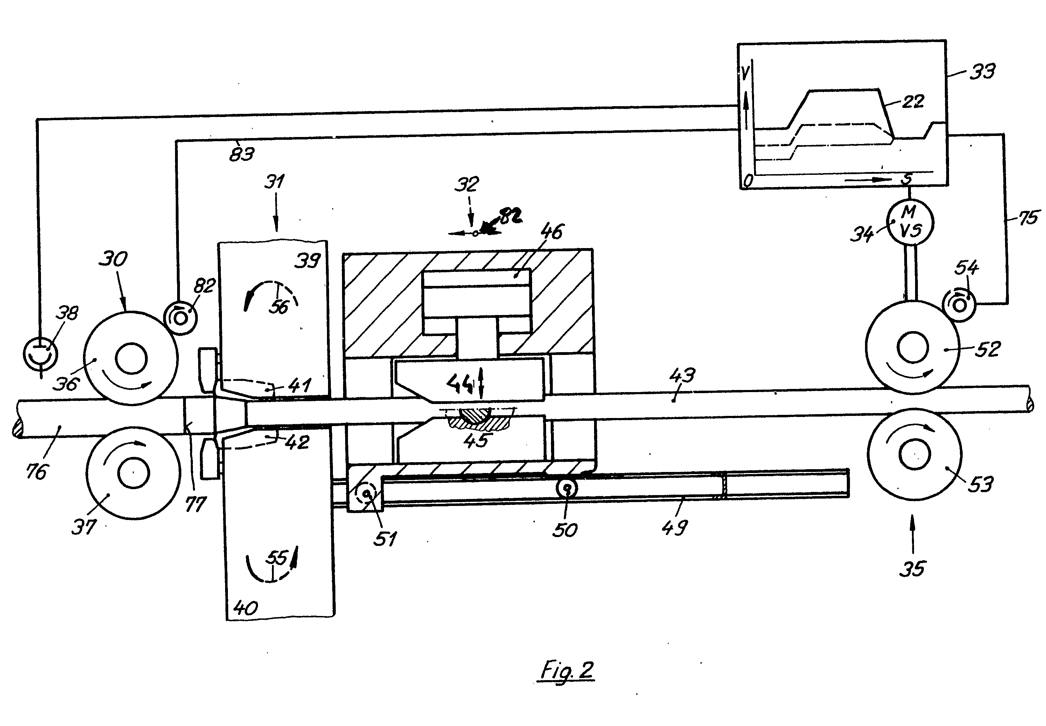

Das Ziel der möglichst exakten axialen Lage der ausgeschobenen und geschälten Stangen oder Rohre läßt sich in besonders günstiger Weise mit der Schälmaschine nach Fig. 2 erreichen. Diese Schälmaschine besteht aus einem Einschubapparat 30, einem Messerkopf 31, einem Spannwagen 32, und einem Auszugsrollenpaar 35. Vor dem Einschubapparat ist ein Impulsgeber 38 angeordnet, der an eine Steuerungseinheit 33 angeschlossen ist. Das Auszugsrollenpaar 35 ist mit einer Längenmeßeinrichtung 54 gekoppelt, deren Ergebnis über die Leitung 75 und in die Steuerungseinheit 33 eingegeben wird. Das Auszugsrollenpaar 35 besteht aus den profilierten Rollen 52, 53, die von einem Motor 34 mit steuerbarer Ausgangsdrehzahl angetrieben wird.

Am Einschubapparat 30 ist eine weitere Längenmeßeinrichtung 82 vorgesehen, die über die Leitung 83 an die Steuerungseinheit 33 angeschlossen ist.

Die Rollen 36, 37 des Einschubapparates sind an ihrem Umfang profiliert, wie die vorbeschriebenen Rollen des Auszugsapparates und werden von einem nicht dargestellten Motor drehangetrieben. Sie schieben das Werkstück axial durch die Schälmaschine und sichern es dabei gegen Verdrehen. In der gezeigten Position schieben sie das nachfolgende Werkstück 76 ohne Zwischenraum hinter dem zur Zeit in Bearbeitung befindlichen Werkstück 43 her. Die eigentliche Spann- und Transportaufgabe für das Werkstück 43 wird dabei — jedenfalls in der Endphase — von dem Spannwagen 32 übernommen.

Der Messerkopf 31 mit seinen Messerhaltern 39, 40 und den Schälmessern 41, 42 schält eine Oberflächenschicht vom Werkstück 43 ab. Der Messerkopf rotiert in Richtung der Pfeile 55, 56.

Auslaufseitig des Messerkopfes ist der Spannwagen 32 angeordnet, der in Richtung des Pfeiles 82 in der Führungsbahn 49 beweglich geführt ist. Der Spannwagen wird in der Führungsbahn durch die Rollen 50, 51 in seiner Lage radial zum Werkstück fixiert. Er wird durch einen nicht dargestellten Zylinder oder ähnliche Antriebsmittel in Vorschubrichtung verschoben. Der Spannwagen 32 hat zwei Spannbacken 44, 45 von denen eine starr mit dem Spannwagen verbunden ist und die andere von einem Spannzylinder 46 zum Spannen und Lösen des Werkstücks 43 radial zu diesem verschieblich gelagert ist. Wie am Beispiel der unteren Spannbacke gezeigt ist, sind die Spannbacken dem Werkstückquerschnitt entsprechend profiliert und können so das Werkstück mit niedriger Flächenpressung sicher einspannen. Die Verwendung eines Spannwagens, zusätzlich zu dem Auszugsrollenpaar bringt den Vorteil mit sich, daß die Weglänge, die zum Separieren der Werkstücke zur Verfügung steht, größer ist als bei der ausschließlichen Verwendung von Auszugsrollen. Die erforderlichen Beschleunigungswerte sind hiermit leichter zu erreichen.

Die Ausführungsform nach Fig. 3 entspricht in wesentlichen Teilen der Ausführungsform nach Fig. 1. Die Antriebsmittel für das Auszugsrollenpaar sind gegenüber Fig. 1 geändert. Alternativ zu dem in Figur 1 gezeigten Gleichstrommotor wird die erfindungsgemäße Mehrstufigkeit des Antriebs der Auszugsrollen durch die Verwendung zweier verschiedener Antriebsquellen erreicht.

Zum einen wird die Geschwindigkeit des Auszugsrollenpaares von den Einschubrollen 7, 8 abgeleitet. Dies gilt für die Phase der Vorschubgeschwindigkeit 71 gemäß Fig. 1 und die Phase der Beschleunigung mit der erhöhten axialen Geschwindigkeit 73. Diese beiden Geschwindigkeiten die dem Werkstück durch das Auszugsrollenpaar vermittelt werden, bestimmen sich ohnehin in Abhängigkeit von der vom Einschubapparat bestimmten Vorschubgeschwindigkeit. Zum behutsamen Ausschieben des Werkstücks wird der Antrieb des Auszugsrollenpaares auf einen Motor mit konstanter Drehzahl (Sollwert) umgeschaltet. Zum Umschalten dienen die Schaltkupplungen 61 und 63. Diese bis jetzt beschriebene Ausführung des Antriebs ist ausreichend bei der Verwendung eines Spannwagens, wie in Fig. 2 gezeigt. Wenn kein Spannwagen zur Anwendung kommt, wie in den Figuren 1 und 3 dargestellt, dann muß eine zusätzliche Geschwindigkeitsstufe durch ein Zusatzgetriebe 60 bzw. eine Zusatzgetriebestufe vorgesehen werden. Bei der ersten Variante wird mit dem Antrieb für das Auszugsrollenpaar dem Werkstück ausschließlich die erhöhte axiale Geschwindigkeit 73 (verdoppelte Vorschubgeschwindigkeit) vermittelt, während die Phase der Vorschubgeschwindigkeit 71 ausschließlich vom Spannwagen bestritten wird. Mit der in dünnen Vollinien angedeuteten zweiten vom Einschubapparat abgeleiteten Getriebestufe kann das Auszugsrollenpaar auch die Phase der Vorschubgeschwindigkeit 71 übernehmen.

Der in Fig. 3 gezeigte Antrieb wird wie folgt geschaltet :

In der Phase 71 (ohne Verwendung eines Spannwagens) sind die Schaltkupplungen 61 und 63 getrennt. Die Schaltkupplung 62 ist zum Ausziehen des Werkstücks 17 aus dem Messerkopf eingeschaltet. Hiernach wird die Kupplung 62 getrennt und die Kupplung 61 greift. Durch die andersartige Übersetzung am Winkelgetriebe 67 gegenüber dem Winkelgetriebe 59 ergibt sich die erwähnte erhöhte, d. h. ungefähr verdoppelte Geschwindigkeit in der Phase 73. Zum behutsamen Ausschieben der fertig geschälten Stange 17 wird die Kupplung 61 wieder getrennt und die Kupplung 63 verbindet den Motor 64 mit dem Auszugsrollenpaar 3. Zur Übernahme der nächsten Stange 29 wird die Kupplung 62 wieder eingeschaltet und gleichzeitig die Kupplung 63 getrennt. Bei Verwendung eines Spannwagens steuert man anstelle der Kupplung 62 das Spannbackenpaar des Spannwagens.

**Patentansprüche**

1. Verfahren zum Drehschälen von in dichter Folge axial vorbewegten metallischen Stangen und Rohren, bei dem das Rundmaterial zunächst an seinem unbearbeiteten Längsabschnitt drehfest eingespannt und axial vorgeschoben wird und gegen Ende der Bearbeitung an seinem fertig bearbeiteten Endabschnitt drehfest eingespannt und axial transportiert wird, bis das Werkstück die Schälmaschine verlassen hat und während des Vorschiebens auf wendelförmiger Bahn abgeschält wird und bei dem die axiale Geschwindigkeit in der Endphase abgesenkt wird, dadurch gekennzeichnet, daß die axiale Geschwindigkeit der geschälten Stange (17) nach Abschluß des Schälvorgangs zur Schaffung eines ausreichenden Zwischenraumes zur nachfolgenden ungeschälten Stange (29) erhöht wird und die Absenkung der axialen Geschwindigkeit sich daran anschließt.

2. Schälverfahren nach Anspruch 1, dadurch gekennzeichnet, daß nach der Erhöhung der axialen Geschwindigkeit diese auf einen Sollwert (70) zu verändert wird.

3. Schälverfahren nach Anspruch 2, dadurch gekennzeichnet, daß der Sollwert (70) zwischen 5 und 40 m/min liegt.

4. Schälmaschine zur Durchführung des Verfahrens nach den vorangegangenen Ansprüchen mit einer Einschubvorrichtung (1) für das Schälgut (17), mit einem rotierenden Messerkopf (2) und mit einer mindestens aus einem Rollenpaar (15, 16) bestehenden Auszugseinrichtung (3) für das fertige Schälgut, sowie einer Regeleinrichtung (21, 4, 6, 5) zur Veränderung der Geschwindigkeit des von der Auszugseinrichtung bewegten Schälgutes (17), wobei die Regeleinrichtung aus mindestens einem Impulsgeber (6) für das nahende Werkstückende und mindestens einer Längenmeßeinrichtung (5) besteht, gekennzeichnet durch einen mehrstufigen Antrieb für das Auszugsrollenpaar (15, 16), durch die Anordnung der Längenmeßeinrichtung (5) am Auszugsrollenpaar, das den Vorschub des geschälten Gutes bewirkt, und dadurch, daß sie auslaufseitig, zusätzlich zu den Auszugsrollen, und in Durchlaufrichtung des Werkstücks gesehen, vor diesen, einen Spannwagen (32) aufweist.

5. Schälmaschine nach Anspruch 4, gekennzeichnet durch einen Gleichstrommotor (4) für den Antrieb der Auszugsrollen (15, 16) und dadurch, daß der Impulsgeber (6) im Bereich der Einschubvorrichtung (1) angeordnet ist, sowie durch eine elektronische Anlage (21) zur Umsetzung der Impulse in Steuersignale für den Gleichstrommotor (4).

6. Schälmaschine nach Anspruch 4, gekennzeichnet durch eine zweite Längenmeßeinrichtung (78), wobei diese im Bereich der Einzugsrollen, vor dem Messerkopf angeordnet ist, und durch eine Leitung (79) mit der sie an die Steuerungseinheit (21) angeschlossen ist.

7. Schälmaschine nach Anspruch 4, gekennzeichnet durch zwei Antriebsmöglichkeiten (57, 64) für das Auszugsrollenpaar (15, 16), wobei alternativ und wechselweise ein Drehstrommotor (64) und eine von dem Einschubapparat abgeleitete Bewegung (57 bis 62 und 67) den Antrieb der Auszugsrollen bilden, wobei beide Varianten durch Schaltkupplungen (61 bis 63) die Verbindung zum Auszugsrollenpaar herstellen.

**Claims**

1. Method for peeling metallic bars and tubes advancing in a close end to end sequence, including a first step of clamping the round material on the unworked length portion against rotation while it is axially advanced and further steps of clamping it against rotation on the worked endportion and advancing it in the final phase of peeling up to the moment, when it has left the peeling machine, the round material being peeled on a helical path while being advanced and the speed of advance being reduced in the endphase, characterized in that the speed of advance of the bar (17), in order to create an interspace to the following bar, is increased after peeling has been finished and before the speed of advance is decreased.

2. Method according to claim 1, characterized in that the reduction of the speed of advance after its increase goes down to a nominal value (70).

3. Method according to claim 2, characterized in that the nominal value is between 5 and 40 meters/min.

4. Peeling device for the realisation of the method of claim 1 comprising an infeed device (1) for the raw material (17), a rotating cutterhead (2) and an extraction device (3) including at least one pair of rollers (15, 16) for the peeled material and a control device (21, 4, 6, 5) for variation of the speed of advance of the material (17) forwarded by the extraction device, the control device including at least one impulse generator (6) for the approaching end of the workpiece and at least one length measuring device (5) characterized in a multi-stage drive for the pair of rollers (15, 16) of the extraction device, in that the length-measuring device is located next to the pair of extraction rollers (15, 16) effecting the advance of the peeled material and in an extraction carriage in addition to the pair of extraction rollers, the extraction carriage being located upstream of the extraction rollers and on the exit side of the peeling device.

5. Peeling device according to claim 4, characterized in that it comprises a DC-motor for driving the extraction rollers (15, 16), in that the impulse generator (6) is located in proximity to the infeed device (1) and in an electronic device (21) fort transferring the impulses into control signals for the DC-motor (4).

6. Peeling device according to claim 4, characterized in a second length measuring device (78) located in proximity to the infeed rollers and upstream of the cutterhead and in a cable (79) connecting the control device (21) and the second length-measuring device (78).

7. Peeling device according to claim 4, characterized in two drives (57, 64) for the pair of extraction rollers (15, 16), the drives comprising an AC-motor and a movement (57 to 62 and 67) derived from the infeed device, the two drives being alternatively connected to the extraction rollers by clutches.

**Revendications**

1. Procédé d'écroûtage par rotation de barres et de tubes métalliques, déplacés vers l'avant dans le sens axial en une suite ininterrompue, selon lequel le produit rond est d'abord serré, sans rotation possible, au niveau de son secteur longitudinal non usiné, puis déplacé vers l'avant dans le sens axial, et, vers la fin de l'usinage, serré, sans rotation possible, au niveau de son secteur définitivement usiné, puis transporté dans le sens axial jusqu'à ce que la pièce usinée ait quitté la machine à écroûter, et, pendant son déplacement vers l'avant, écroûté suivant un trajet hélicoïdal, et dans lequel la vitesse axiale est réduite pendant la phase finale, caractérisé en ce que la vitesse axiale de la barre écroûtée (17) est augmentée après l'opération d'écroûtage, de manière à réaliser un intervalle suffisant avec la barre suivante non écroûtée (29), et en ce que la diminution de la vitesse axiale a lieu immédiatement après.

2. Procédé d'écroûtage selon la revendication 1, caractérisé en ce qu'après l'augmentation de la vitesse axiale, celle-ci est ramenée à une valeur de consigne (70).

3. Procédé d'écroûtage selon la revendication 2, caractérisé en ce que cette valeur de consigne (70) est comprise entre 5 et 40 m/min.

4. Machine à écroûter pour la mise en œuvre du procédé selon les revendications précédentes, comportant un dispositif (1) assurant l'avance du produit à écroûter (17), une tête porte-lames (2), un dispositif (3) assurant l'extraction du produit écroûté et constitué par au moins un couple de rouleaux (15, 16), et un dispositif de réglage (21, 4, 6, 5) modifiant la vitesse du produit écroûté (17) déplacé par le dispositif d'extraction, le dispositif de réglage étant constitué par au moins un émetteur d'impulsions (6) pour l'extrémité de la pièce à usiner qui s'approche, et par au moins un dispositif (5) de mesure des longueurs, caractérisée par un dispositif d'entraînement à plusieurs échelons pour le couple de rouleaux d'extraction (15, 16), par l'association du dispositif (5) de mesure des longueurs avec le couple de rouleaux d'extraction qui assure l'avance du produit écroûté, et par le fait qu'elle comporte, du côté sortie, en plus des rouleaux d'extraction, un chariot de serrage (32) située en avant de la pièce, dans le sens de déplacement de celle-ci.

5. Machine à écroûter selon la revendication 4, caractérisée en ce qu'elle comporte un moteur (4) à courant continu pour l'entraînement des rouleaux d'extraction (15, 16), en ce que l'émetteur d'impulsions (6) est placé dans la zone du dispositif d'introduction (1), et en ce qu'elle comporte une installation électronique (21) pour la transformation des impulsions en signaux de commande du moteur à courant continu (4).

6. Machine à écroûter selon la revendication 4, caractérisée en ce qu'elle comporte un deuxième dispositif (78) pour la mesure des longueurs, monté dans la zone des rouleaux d'introduction, en avant de la tête porte-lames, et une canalisation (79) reliant ce dispositif à l'unité de commande (21).

7. Machine à écroûter selon la revendication 4, caractérisée par deux possibilités d'entraînement (57, 64) du couple de rouleaux d'extraction (15, 16), le dispositif d'entraînement des rouleaux d'extraction étant constitué alternativement par un moteur à courant triphasé (64) et par un mouvement (57 à 62 et 67) dérivant de l'appareil d'introduction, les deux variantes étant réalisées par des accouplements (61 à 63) assurant la liaison avec le couple de rouleaux d'extraction.

Fig. 1

_Fig. 2_

0 078 344

Fig. 3

0 078 344